# EUROPEAN PATENT APPLICATION

(11) **EP 1 529 949 A1**
(43) Date of publication of application: **11.05.2005**
(21) Application number: 04256837.8
(22) Date of filing: 04.11.2004
(51) Int. Cl.: F02K 1/80, B32B 15/02, B32B 7/02, B32B 7/04, C04B 37/02

(54) **Method and apparatus for increasing a durability of an exhaust nozzle flap seal**

(30) Priority: 07.11.2003 US 703273
(71) Applicant: General Electric Company, Schenectady, NY 12345 (US)
(72) Inventor: Carper, Douglas M., Cincinnati, Ohio 45215 (US); Millard, Michael L., Cincinnati, Ohio 45215 (US)
(74) Representative: Goode, Ian Roy

(57) **Abstract**

A variable geometry exhaust nozzle (90) for a gas turbine engine (20) having an exhaust centerline (74), said nozzle (90) comprising:
a plurality of flaps (70) arranged around the exhaust centerline (74), each of said flaps (70) having a sealing surface (78); and
a plurality of flap seals (72), each of said seals (72) having a body (80) including a sealing surface (82) and being positioned between a pair of flaps (70) of said plurality of flaps (70) such that said sealing surface (82) of said seal engages said sealing surface (78) of at least one of said adjacent flaps (70),
wherein at least one of said seals has a cover (180) including a metallic wire mesh bonded to said body (80) with an adhesive so that said cover (180) overlaps at least a portion of an edge (168) of said body (80).

## Description

The present invention relates generally to ceramic matrix composite materials, and more specifically to a method and apparatus for increasing a durability of a ceramic matrix composite material.

Gas turbine engines typically include a compressor, a combustor, and a turbine. Airflow entering the compressor is compressed and channeled to the combustor, wherein the air is mixed with a fuel and ignited within a combustion chamber to produce combustion gases. The combustion gases are channeled to a turbine that extracts energy from the combustion gases for powering the compressor. One turbine extracts energy from the combustion gases to power the compressor. Other turbines may be used to power an output shaft connected to a load, such as an electrical generator. In some applications, the combustion gases exiting the turbine(s) are channeled through an engine exhaust nozzle to produce thrust for propelling an aircraft in flight.

Some known gas turbine aircraft engines include an engine exhaust nozzle having a variable geometry configuration, wherein a cross-sectional area of the exhaust nozzle is adjustable. Variable geometry exhaust nozzles typically have a plurality of flaps and a plurality of seals mounted circumferentially about a centerline of the exhaust nozzle. The seals are mounted generally between adjacent nozzle flaps, such that the flaps and seals form a generally continuous interior surface that directs a flow of the combustion gases through the exhaust nozzle. As their name implies, the seals seal the spaces between the flaps and shield various components of the exhaust nozzle from high temperatures and high thermal gradients during flow of the combustion gases therein.

To facilitate extending a useful life at high temperature operation, some seals are fabricated from non-metallic composite materials, such as ceramic matrix composite materials. However, even such non-metallic materials experience wear and other damage due to the hostile operating environment in gas turbine engines. For example, the seal edges may erode due to frictional contact with the flaps as well as point contact rub caused by part deformation from the high thermal gradients the seals experience during operation.

In one aspect of the present invention, an inseparable assembly is provided having a body including a ceramic matrix composite material, and a cover including a metallic wire mesh. The cover is bonded to the body so that the cover overlaps at least a portion of the body.

In another aspect of the invention, a variable geometry exhaust nozzle is provided for a gas turbine engine having an exhaust centerline. The nozzle includes a plurality of flaps arranged around the exhaust centerline, each of the flaps having a sealing surface, and a plurality of flap seals. Each seal has a body which includes a sealing surface. The body is positioned between a pair of flaps of the plurality of flaps so that the sealing surface of the seal engages the sealing surface of at least one of the adjacent flaps. At least one of the seals has a cover including a metallic wire mesh bonded to the body with an adhesive so that the cover overlaps at least a portion of an edge of the body.

In yet another aspect, a method is provided for increasing a durability of a body including a ceramic matrix composite material. The method includes the steps of positioning a cover including a metallic wire mesh over at least a portion of the body, and bonding the positioned cover to the body.

Embodiments of the invention will now be described, by way of example, with reference to the accompanying drawings, in which:
Fig. 1 is a schematic of an exemplary gas turbine engine;
Fig. 2 is a perspective of a portion of the gas turbine engine shown in Fig. 1 illustrating a portion of an exemplary exhaust nozzle assembly;
Fig. 3 is a cross section of the exhaust nozzle assembly shown in Fig. 2 taken alone line 3-3 of Fig. 2;
Fig. 4 is a perspective of an exemplary flap seal body for use with the exhaust nozzle assembly shown in Fig. 2;
Fig. 5 is a perspective of the flap seal body shown in Fig. 4 after a material removal process;
Fig. 6 is a cross-section of the flap seal body shown in Fig. 5 taken along line 6-6 of Fig. 5;
Fig. 7 is a cross-section of the flap seal body shown in Fig. 5 taken along line 7-7 of Fig. 5;
Fig. 8 is a perspective of an exemplary cover for use with the flap seal body shown in Fig. 5;
Fig. 9 is a cross-section of the cover shown in Fig. 8 taken along line 9-9 of Fig. 8; and
Fig. 10 is a perspective view of the flap seal body shown in Fig. 5 having a plurality of covers, such as the cover shown in Fig. 8, bonded thereto.

Corresponding reference characters indicate corresponding parts throughout the several views of the drawings.

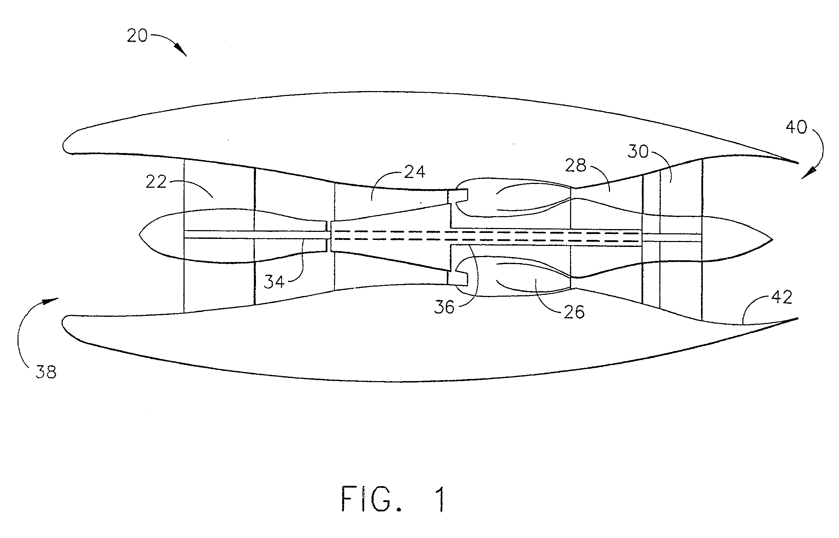

Referring now the to the drawings, Fig. 1 is a schematic of a gas turbine engine 20 including a fan 22, a high pressure compressor 24, and a combustor 26. The engine 20 also includes a high pressure turbine 28 and a low pressure turbine 30. The fan 22 and the turbine 30 are coupled by a first shaft 34, and the high pressure compressor 24 and the turbine 28 are coupled by a second shaft 36. In one embodiment, the engine 20 is a F414 engine commercially available from GE Aircraft Engines, Evendale, Ohio.

In operation, air received through an inlet end 38 of the engine 20 is compressed by the fan 22 and channeled to the high pressure compressor 24, wherein the compressed air is compressed even further. The highly compressed air from the high pressure compressor 22 is channeled to the combustor 26, wherein it is mixed with a fuel and ignited to produce combustion gases. The combustion gases are channeled from the combustor 26 to drive the turbines 28 and 30, and exit an outlet end 40 of the engine 20 through an exhaust nozzle assembly 42 to provide thrust.

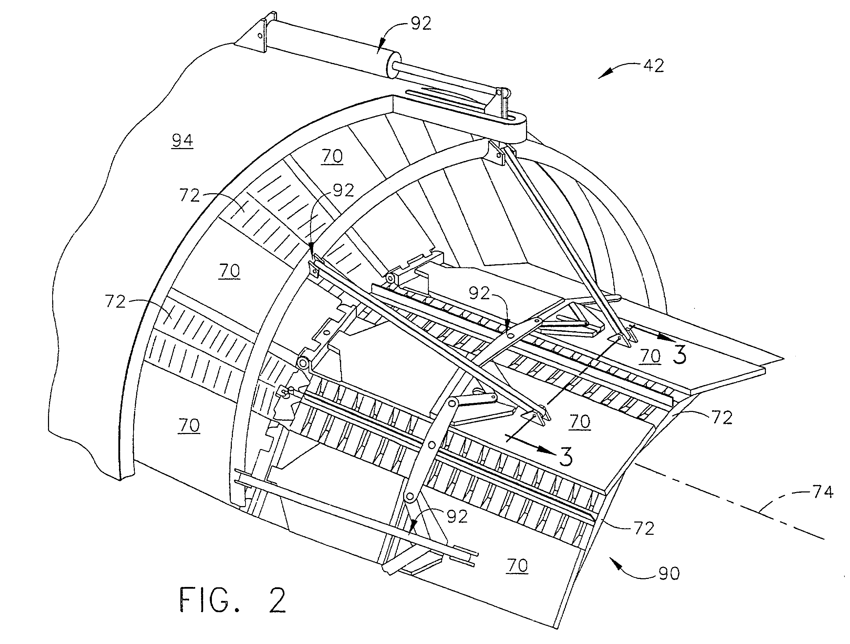

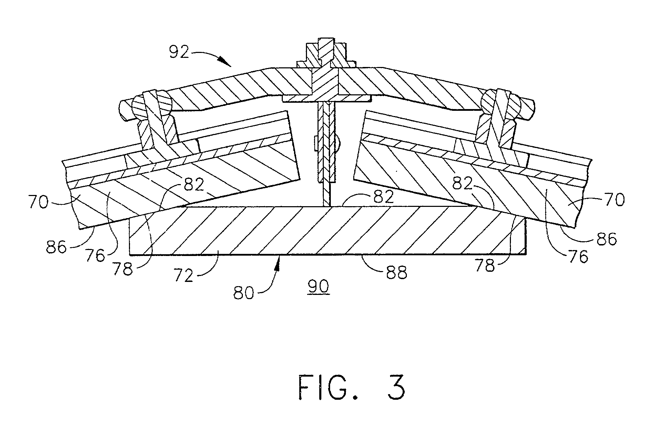

Fig. 2 is a perspective of a portion of the gas turbine engine 20 illustrating a sector of the exhaust nozzle assembly 42. Fig. 3 is a cross section of the exhaust nozzle assembly 42 taken along line 3-3 of Fig. 2. The nozzle assembly 42 includes a plurality of flaps 70 and a plurality of flap seals 72. The flaps 70 and the flap seals 72 are arranged circumferentially around a centerline 74 of the exhaust nozzle assembly 42. Each flap seal 72 is positioned between a pair of adjacent flaps 70 and radially inwardly with respect to the flaps 70, such that a portion of each flap seal 72 overlaps a portion of each adjacent flap 70. More specifically, each flap 70 includes a body 76 having a sealing surface 78, and each flap seal 72 includes a body, generally referred to by the reference numeral 80, having a sealing surface 82. The flap seals 72 overlap adjacent flaps 70 such that during operation of the engine 20 a portion of each flap sealing surface 78 contacts a portion of each corresponding sealing surface 82 generally along an axial length of the flaps 70 and the flap seals 72. In one embodiment, the flap seal bodies 80 are fabricated from a ceramic matrix composite material. In another embodiment, the flap seal bodies 80 are fabricated from an oxide-based ceramic matrix composite material. Additionally, in one embodiment, the flap bodies 76 are fabricated from a ceramic matrix composite material.

Respective radially inner surfaces 86 and 88 of the flaps 70 and the flap seals 72 form a generally continuous interior surface defining an exhaust nozzle orifice 90. The orifice 90 directs a flowpath of gases received from the turbine 30 (shown in Fig. 1) out of the engine outlet end 40 to produce thrust. In the exemplary embodiment, the exhaust nozzle assembly 42 is a variable geometry exhaust nozzle, wherein a cross-sectional area of the nozzle orifice 90 is adjustable. A mounting assembly, generally referred to herein with the reference numeral 92, couples each flap seal 72 to adjacent flaps 70. The assembly 92 is movably coupled to an outer casing 94 of the engine 20 to facilitate adjustment of the cross-sectional area of the orifice 90. Additionally, the assembly 92 allows relative motion between the flaps 70 and the flap seals 72 to facilitate contact between the sealing surfaces 78 and respective sealing surfaces 82, and to facilitate adjustment of the cross-sectional area of the orifice 90. In the exemplary embodiment, the exhaust nozzle orifice 90 is generally annular, however, it should be understood the orifice 90 may be any suitable shape. For example, in an alternative embodiment, the exhaust nozzle orifice 90 is generally rectangular.

During operation of the engine 20, a pressure of the flowpath gases exiting through the exhaust nozzle orifice 90 urges the flap seals 72 against the flaps 70, and more specifically, urges the sealing surfaces 82 of the seals 72 in contact with respective sealing surfaces 78 of the flaps 70. As gases flow through the nozzle assembly 42, and more specifically the exhaust nozzle orifice 90, contact between the sealing surfaces 78 and respective sealing surfaces 82 substantially prevents leakage of gases between the flaps 70 and the flap seals 72.

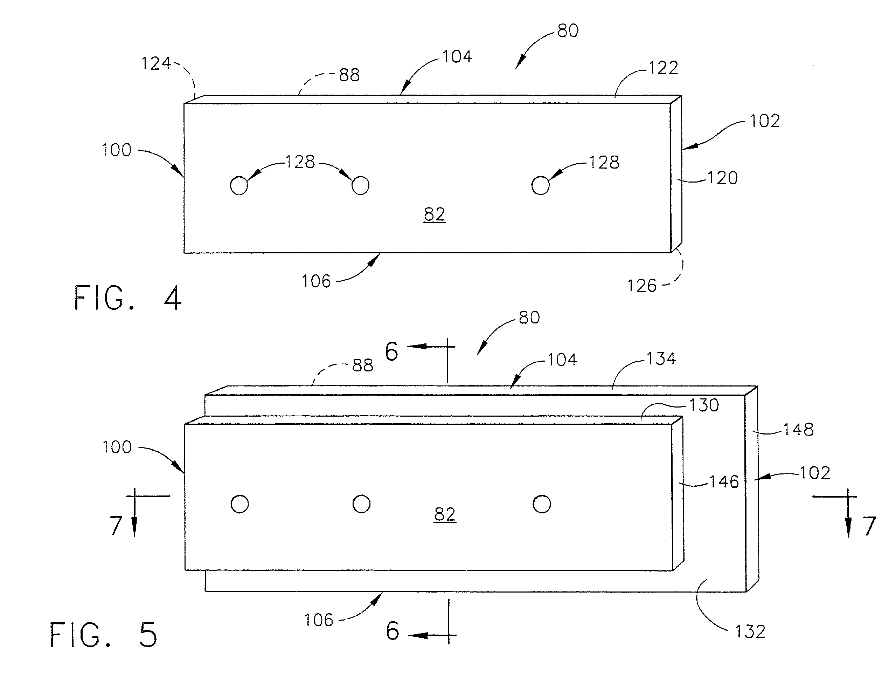

Fig. 4 is a perspective of an exemplary flap seal body 80 for use with the exhaust nozzle assembly 42 (shown in Figure 2). Generally, the body 80 includes a plurality of ends 100, 102, 104, and 106. The body 80 also includes the sealing surface 82, the radially inner surface 88, and a plurality of other surfaces 120, 122, 124, and 126. Any of the surfaces 82, 88, 120, 122, 124, and 126 may be designated a first surface or a second surface. The body 80 also includes plurality of openings, generally referred to by the reference numeral 128, for attachment to the mounting assembly 92.

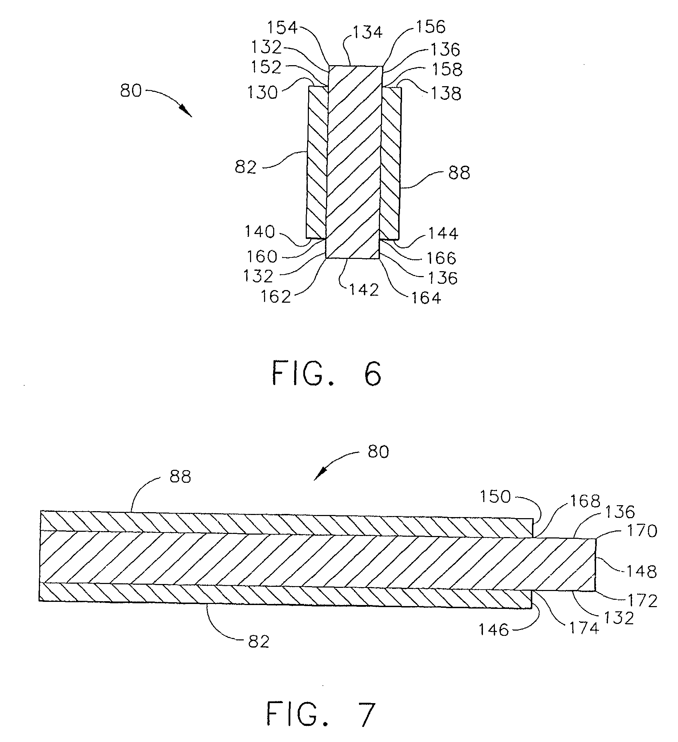

Fig. 5 is a perspective of the flap seal body 80 after a material removal process. Fig. 6 is a cross-section of the flap seal body 80 taken along line 6-6 of Fig. 5. Fig. 7 is a cross-section of the flap seal body 80 taken along line 7-7 of Fig. 5. Material is removed from the body 80 using any suitable machining process, such as, for example, cutting, grinding, planing, facing, and/or milling. After material removal, the body 80 generally includes the ends 100, 102, 104, and 106, the sealing surface 82, the radially inner surface 88, and a plurality of mating surfaces 130, 132, 134, 136, 138, 140, 142, 144, 146, 148, and 150. In the exemplary embodiment, the mating surfaces 130, 134, 138, 140, 142, and 144 are generally perpendicular to the surfaces 132 and 136. In addition, in the exemplary embodiment, the mating surfaces 132 and 136 are generally perpendicular to the surfaces 146, 148, and 150. Any of the surfaces 82, 88, 130, 132, 134, 136, 138, 140, 142, 144, 146, 148, and 150 may be designated a first surface or a second surface.

A plurality of edges 152, 154, 156, 158, 160, 162, 164, 166, 168, 170, 172, and 174 extend between corresponding surfaces 130, 132, 134, 136, 138, 140, 142, 144, 146, 148, and 150 of the body 80. More specifically, the edge 152 is defined at the intersection of the surfaces 130 and 132, the edge 154 is defined at the intersection of the surfaces 132 and 134, the edge 156 is defined at the intersection of the surfaces 134 and 136, and the edge 158 is defined at the intersection of the surfaces 136 and 138. Similarly, the edge 160 is defined at the intersection of the surfaces 140 and 132, the edge 162 is defined at the intersection of the surfaces 132 and 142, the edge 164 is defined at the intersection of the surfaces 142 and 136, and the edge 166 is defined at the intersection of the surfaces 136 and 144. Additionally, the edge 168 is defined at the intersection of the surfaces 150 and 136, the edge 170 is defined at the intersection of the surfaces 136 and 148, the edge 172 is defined at the intersection of the surfaces 148 and 132, and the edge 174 is defined at the intersection of the surfaces 132 and 146.

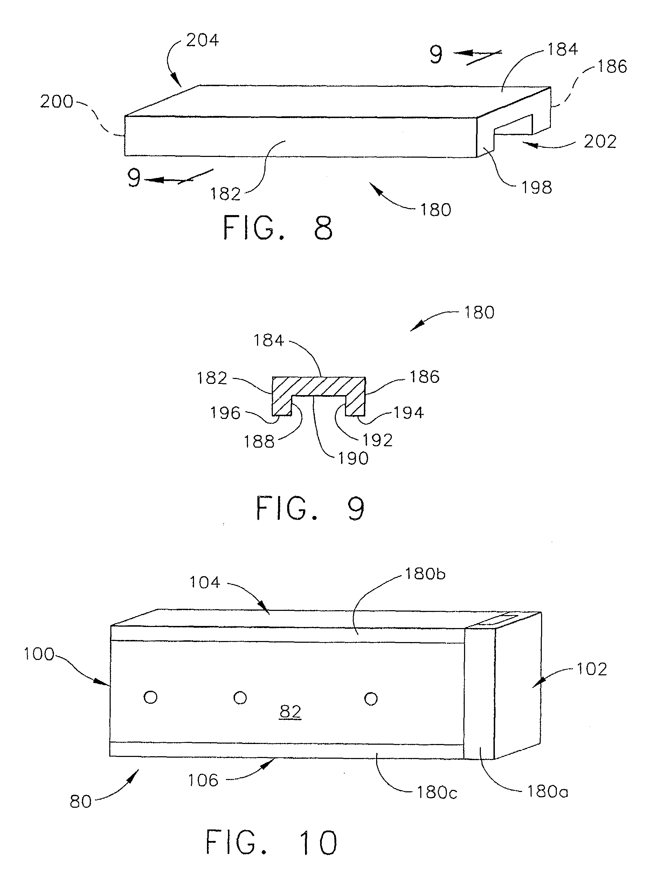

Fig. 8 is a perspective of an exemplary cover, generally referred to by the reference numeral 180, for use with the flap seal body 80 (shown in Figure 5).

Fig. 9 is a cross-section of the cover 180 taken along line 9-9 of Fig. 8. The cover 180 includes a plurality of outer sides 182, 184, and 186, and a plurality of mating sides 188, 190, 192, 194, and 196. The cover 180 also includes end surfaces 198 and 200 generally defining respective ends, generally referred to by the reference numerals 202 and 204, of the cover 180. In the exemplary embodiment, the outer sides 182 and 186 are generally perpendicular to the outer side 184, and the mating sides 188 and 192 are generally perpendicular to the mating sides 190, 194, and 196. The cover 180 has a predetermined durability that is greater than a predetermined durability of a portion of the flap seal body 80 adjacent one or more of the flap seal body ends 100, 102, 104, and 106. In one embodiment, the flap seal body 80 has a substantially uniform durability throughout that is less than the predetermined durability of the cover 180.

In one embodiment, the cover 180 is a metallic wire mesh, however, it should be understood that the cover 180 may be any material, and may be fabricated in any material configuration, having a durability greater than a predetermined durability of a portion of the flap seal body 80, and more specifically, a portion of the flap seal body 80 that includes the cover 180 bonded thereto, as described below. In one embodiment, the cover 180 is a metallic wire mesh fabricated from a nickel-based alloy, such as, for example, HAYNES® HASTELLOY X™ alloy, commercially available from Haynes International, Inc., Kokomo, Indiana. In another embodiment, the cover 180 is a metallic wire mesh fabricated from a cobalt-based alloy, such as, for example, HAYNES® alloy 188, commercially available from Haynes International, Inc., Kokomo, Indiana. In yet another embodiment, the cover 180 is a metallic wire mesh fabricated from stainless steel, such as, for example, stainless steel grade 316 commercially available from Cleveland Wire Cloth, Cleveland, Ohio.

Fig. 10 is a perspective view of the flap seal body 80 having a plurality of the covers 180 bonded thereto to increase a durability of the seal body 80 generally adjacent the ends 102, 104, and 106. In the exemplary embodiment, a plurality of the covers 180 are bonded to the seal body 80. However, it should be understood that the seal body 80 may have any number of the covers 180 bonded thereto. For example, in an alternative embodiment, the body 80 has only one cover 180 bonded thereto. Additionally, in the exemplary embodiment, the body 80 includes a plurality of the covers 180 that are each bonded to the seal body 80 adjacent a corresponding end 102, 104, and 106. However, it should be understood that the seal body 80 may include a cover 180 bonded thereto adjacent the body end 100.

The covers 180, referred to herein as the covers 180a, 180b, and 180c with regard to Fig. 10, are bonded to the seal body 80 using an adhesive. In one embodiment, the adhesive used to bond the covers 180a, 180b, and 180c to the seal body 80 is a ceramic adhesive, for example, a ceramic adhesive produced by combining a glass powder, for example, SP921® glass powder from Specialty Glass, Florida, and an alumina powder with a silica yielding polymer. Another example of a ceramic adhesive is Cotronics 901® adhesive, available from Cotronics Corporation, Brooklyn, NY. Additionally, prior to bonding the covers 180a, 180b, and 180c to the flap seal body 80, the seal body mating surfaces 130, 132, 134, 136, 138, 140, 142, 144, 146, 148, and 150 are cleaned by slightly sanding the surfaces and applying a solvent, for example acetone or isopropanol, to provide a substantially wetable surface that facilitates adhesion between the adhesive and the mating surfaces.

After cleaning, the adhesive is applied to some or all of the mating sides 188, 190, 192, 194, and 196 of each cover 180a, 180b, and 180c, in addition to the seal body mating surfaces 130, 132, 134, 136, 138, 140, 142, 144, 146, 148, and 150. The covers 180a, 180b, and 180c are then positioned on the seal body 80 over the respective ends 102, 104, and 106, as illustrated in Fig. 10. More specifically, the cover 180a is positioned over the end 102 such that the mating sides 188, 190, 192, 194, and 196 of the cover 180a contact the respective mating surfaces 132, 148, 136, 150, and 146 of the body 80, and accordingly, the cover 180a overlaps the seal body edges 168, 170, 172, and 174. Additionally, the cover 180b is positioned over the end 104 such that the mating sides 188, 190, 192, 194, and 196 of the cover 180b contact the respective mating surfaces 132, 134, 136, 138, and 130 of the body 80, and accordingly, the cover 180b overlaps the seal body edges 152, 154, 156, and 158. Furthermore, the cover 180c is positioned over the end 106 such that the mating sides 188, 190, 192, 194, and 196 of the cover 180c contact the respective mating surfaces 136, 142, 132, 140, and 144 of the body 80, and accordingly, the cover 180c overlaps the seal body edges 160, 162, 164, and 166. Once dry, the adhesive bonds the covers 180 to the seal body 80. The greater durability of the covers 180 with respect to the body 80 facilitates increasing the durability of the seal body ends 102, 104, and 106 by reinforcing the body 80 adjacent the ends 102, 104, and 106.

In the exemplary embodiment, the covers 180a, 180b, and 180c each substantially overlap the respective ends 102, 104, and 106. However, it will be understood that the covers 180a, 180b, and 180c may each overlap only a portion of the respective ends 102, 104, and 106. Additionally, in the exemplary embodiment, the covers 180a, 180b, and 180c each substantially overlap the respective edges 168, 170, 172, 174, 152, 154, 156, 158, 160, 162, 164, and 166. However, it will be understood that the covers 180a, 180b, and 180c may each overlap only a portion of the respective edges 168, 170, 172, 174, 152, 154, 156, 158, 160, 162, 164, and 166.

Although the seal body 80 is herein described and illustrated in the exemplary manner, it should be understood that the seal body 80 may include any number of covers 180 each bonded to any portion of the body 80 such that at least one cover 180 overlaps at least a portion of the body 80.

The above-described cover is cost-effective and reliable for increasing a durability of a ceramic matrix composite material. More specifically, the cover facilitates reinforcing a portion of the ceramic matrix composite material. As a result, the cover may increase the performance and useful life of the ceramic matrix composite material, and thereby reduce replacement costs. Additionally, the cover may increase a wear resistance and a strain to failure ratio of the ceramic matrix composite material, and may allow the ceramic matrix composite material to experience higher thermal gradients without failing. In the exemplary embodiment, the cover facilitates increasing the performance and useful life of a gas turbine engine exhaust seal. As a result, the exemplary cover facilitates reducing a number of exhaust nozzle seals that are replaced within a gas turbine engine to maintain a desired operational efficiency of the engine.

Although the invention is herein described and illustrated in association with a gas turbine engine, and more specifically, in association with an exhaust nozzle seal for use with a gas turbine engine, it should be understood that the present invention is applicable to any ceramic matrix composite material. Accordingly, practice of the present invention is not limited to gas turbine engine exhaust nozzle seals nor gas turbine engines generally. Additionally, practice of the present invention is not limited to gas turbine engine exhaust nozzle seals that are fabricated from ceramic matrix composite materials. Rather, it should be understood that the present invention is applicable to gas turbine engine seals that are fabricated from materials other than ceramic matrix composite materials.

Exemplary embodiments of gas turbine engine exhaust nozzle assemblies are described above in detail. The assemblies are not limited to the specific embodiments described herein, but rather, components of each assembly may be utilized independently and separately from other components described herein. Each exhaust nozzle assembly component can also be used in combination with other exhaust nozzle assembly components.

When introducing elements of the present invention or the preferred embodiment(s) thereof, the articles "a", "an", "the" and "said" are intended to mean that there are one or more of the elements. The terms "comprising", "including" and "having" are intended to be inclusive and mean that there may be additional elements other than the listed elements.

## Claims

1. An inseparable assembly comprising:
a body including a ceramic matrix composite material; and
a cover comprising a metallic wire mesh, said cover bonded to said body so that said cover overlaps at least a portion of said body.

2. An assembly in accordance with Claim 1 wherein said body further comprises a first surface, a second surface, and an edge extending between said first surface and said second surface, said cover being bonded to at least one of said first surface and said second surface so that said cover overlaps at least a portion of said edge.

3. An assembly in accordance with Claim 1 wherein said body further comprises an end, said cover being bonded to said body so that said cover overlaps at least a portion of said end.

4. An assembly in accordance with Claim 1 wherein said ceramic matrix composite material has a first predetermined durability, and said metallic wire mesh has a second predetermined durability greater than said first durability.

5. An assembly in accordance with Claim 1 wherein said metallic wire mesh comprises at least one of a nickel-based alloy, a cobalt-based alloy, and a stainless steel.

6. An assembly in accordance with Claim 1 wherein said cover is bonded to said body with an adhesive.

7. An assembly in accordance with Claim 6 wherein said adhesive comprises a ceramic adhesive.

8. An assembly in accordance with Claim 7 wherein said ceramic adhesive comprises the combination of a glass powder, an alumina powder, and a silica yielding polymer.

9. A variable geometry exhaust nozzle (90) for a gas turbine engine (20) having an exhaust centerline (74), said nozzle (90) comprising:
a plurality of flaps (70) arranged around the exhaust centerline (74), each of said flaps (70) having a sealing surface (78, 82); and
a plurality of flap seals (72), each of said seals (72) having a body (80) including a sealing surface (78, 82) and being positioned between a pair of flaps (70) of said plurality of flaps (70) such that said sealing surface (78, 82) of said seal engages said sealing surface (78, 82) of at least one of said adjacent flaps (70),
wherein at least one of said seals has a cover (180) including a metallic wire mesh bonded to said body (80) with an adhesive so that said cover (180) overlaps at least a portion of an edge (168) of said body (80).

10. A method for increasing a durability of a body (80) comprising a ceramic matrix composite material, said method comprising the steps of:
positioning a cover (180) comprising a metallic wire mesh over at least a portion of said body (80); and
bonding said positioned cover (180) to said body (80).
